# EUROPEAN PATENT APPLICATION

(11) **EP 3 321 694 A1**
(43) Date of publication of application: **16.05.2018**
(21) Application number: 16198100.6
(22) Date of filing: 10.11.2016
(51) Int. Cl.: G01Q 60/34

(54) **METHOD OF MODIFYING A SURFACE OF A SAMPLE, AND A SCANNING PROBE MICROSCOPY SYSTEM**

(71) Applicant: Nederlandse Organisatie voor toegepast- natuurwetenschappelijk onderzoek TNO, 2595 DA 's-Gravenhage (NL)
(72) Inventor: Sadeghian Marnani, Hamed, 2595 DA's-Gravenhage (NL); Keyvani Janbahan, Aliasghar, 2595 DA's-Gravenhage (NL); Tamer, Mehmet Selman, 2595 DA's-Gravenhage (NL); Maturova, Klara, 2595 DA's-Gravenhage (NL)
(74) Representative: V.O.

(57) **Abstract**

This document relates to a method and system for modifying a sample surface using a scanning probe microscopy system comprising a probe having a cantilever and a probe tip. The method comprises vibrating the probe; controlling a distance between the surface and the probe for tapping of the probe tip on the surface; and adjusting a tapping force of the probe tip on the surface during said tapping, so as to selectively modify the surface during the tapping. The probe is vibrated by employing a multi-frequency excitation comprising at least two frequencies for simultaneous imaging and modifying of the surface.

## Description

### Field of the invention

The present invention is directed at a method of modifying a surface of a sample using a scanning probe microscopy system, the system comprising a scan head including a probe, the probe comprising a cantilever and a probe tip arranged on the cantilever, wherein the scan head is movable relative to the sample for scanning the sample surface with the probe tip, the method comprising the steps of: vibrating the probe using an actuator for excitation of the probe with an excitation signal; controlling a distance between the sample surface and the probe for tapping of the probe tip on the surface by said excitation of the probe; and adjusting a tapping force of the probe tip on the surface during said tapping, so as to selectively modify the surface during the tapping. The invention is further directed at a scanning probe microscopy system, and to a computer program product for a scanning probe microscopy system.

### Background

Scanning probe microscopy (SPM) is a key instrument in the development of nanoscience and nanotechnology. Unlike most forms of imaging, it does not rely on electrons or photons to probe a sample. Typically, SPM devices, such as atomic force microscopy (AFM) devices as described above are used for performing surface measurements on the surface of a sample. For example, AFM devices are applied in the semiconductor industry for scanning of semiconductor topologies on a surface. Other uses of this technology are found in biomedical industry, nanotechnology, material science, experimental physics, and some other scientific applications. The recent advances in AFM technology already carried its application to beyond topography imaging, such as subsurface elasticity measurement, unfolding force measurement of biomolecules, thermal conductivity measurements, surface chemical composition mapping, mechanical properties mapping and many others. In particular, AFM may be used for critical dimension metrology (CD-metrology), particle scanning, and roughness measurements. AFM allows visualization of surfaces at very high accuracy, enabling visualization of surface elements at sub-nanometer resolution. Topography imaging with tapping mode AFM (TM-AFM) can currently be considered as a popular application. Other surface scanning measurement devices for example include optical near field scanning devices.

The probe in an SPM system comprises a cantilever and a probe tip. On one end of the cantilever, the probe is attached to a sensor head, for example (but not necessarily) through an actuator that allows to bring the probe in motion. Probe tip is usually located on the other end of the cantilever. In SPM, the probe tip is scanned over the surface of a sample or substrate to measure the topography and in some cases mechanical properties thereof. A sensor, in many cases an optical sensor, monitors the position of the probe tip. For example, the sensor may monitor a reflected laser beam that is reflected by the cantilever or the back of the probe tip, and which changes angle when the probe tip moves up or down.

When a SPM is operated in a dynamic operation mode, the cantilever is vibrated during scanning thereof across the surface. Generally, the topography image of the surface is obtained by measuring the effects of the surface on the probe and keeping it constant by adjusting the height of the probe using a feedback loop and a piezoelectric actuator. The height of the probe is then monitored, and from this, the topography can be obtained. A number of different modes are available and known to the skilled person. For AFM, these modes for example include tapping mode AFM (TM-AFM) wherein the probe is brought intermittently in contact with the surface and which may performed in combination with amplitude modulation AFM (AM-AFM) wherein the amplitude is kept constant, frequency modulation AFM (FM-AFM) wherein the resonance frequency of the probe is kept constant, and peak force tapping mode AFM (PFT-AFM) wherein the probe is moved quasi-statically and maximum deflection is kept constant.

One of the most used AFM operation schemes is Tapping Mode AFM (TM-AFM). In this technique the cantilever is excited with a frequency near its fundamental resonance frequency and brought in intermittent contact with the sample surface until its amplitude decreases to a certain set point amount. While scanning, the amplitude can be kept constant by adjusting the distance between the cantilever and the sample. The control signal, amplitude error and phase signals are interpreted as the height, amplitude error, and phase images, respectively. In TM-AFM the tip hits the sample surface in every cycle, and thus experiences both attractive and repulsive forces. Typically, TM-AFM is employed for performing surface measurements on a surface of a sample or imaging of a sample surface.

For modifying a surface of a sample, such as patterning for lithography, different methods exist. Examples of patterning methods comprise optical/UV/EUV lithography, ion/E-beam, and AFM based lithography. AFM based lithography includes dip-pen lithography, thermal lithography, or scratching, wherein an AFM tip is used to locally add, burn or remove material from the surface of a sample, respectively.

One disadvantage of the scratching AFM method is that typically nano-scratching requires multiple times scanning and multiple cantilevers. During nano-scratching, the cantilever is lowered to the surface of the sample, wherein, at first, the surface can be imaged without modifying and/or damaging the surface of the sample at a certain Z-level, wherein the Z-level is indicative of the distance between the probe and a sample surface. Then, the force of the cantilever on the sample surface can be controlled and increased so as to start the scratching of the surface, during which the sample surface is modified by the probe tip in contact with the surface. Typically, in order to increase the force of the probe tip on the sample surface, the Z-level height is adjusted accordingly. Since first the Z-level is adjusted for increasing the force sufficient so as to be able to start imaging, and then the force is further increased so as to be able to start scratching the sample surface, this process requires interruptions, because the Z-level of the probe needs to be adjusted depending on the required force for imaging or scratching. Also, said force needs to be adjusted appropriately depending on the depth of scratching. Adjustment of the Z-level in order to adjust the force of a probe tip of an AFM on a surface of a sample results in a more complex system.

### Summary of the invention

It is an object of the invention to provide for a method and a system that obviates at least one of the above mentioned drawbacks.

Further, it is an object of the present invention to enable modification of a surface of a sample based on SPM for nano-patterning.

To this end, in accordance with a first aspect, there is provided herewith a method of modifying a surface of a sample using a scanning probe microscopy system, the system comprising a scan head including a probe, the probe comprising a cantilever and a probe tip arranged on the cantilever, wherein the scan head is movable relative to the sample for scanning the sample surface with the probe tip, the method comprising the steps of: vibrating the probe using an actuator for excitation of the probe with an excitation signal; controlling a distance between the sample surface and the probe for tapping of the probe tip on the surface by said excitation of the probe; and adjusting a tapping force of the probe tip on the surface during said tapping, so as to selectively modify the surface during the tapping. The actuator can be arranged to perform a multi-frequency excitation with an excitation signal comprising at least two frequencies for simultaneous imaging of the sample surface, and modifying of the sample surface, wherein the tapping force as a result of a first excitation frequency of the at least two frequencies is configured for imaging and the tapping force as a result of a second excitation frequency of the at least two frequencies is sufficiently large for modifying of the sample surface. The method thus enables manipulation of atoms and molecules at surfaces of a sample with an AFM. The controlled manipulation of atoms on the surface plane is a result of the hammering of the AFM probe tip on said surface while scanning the probe in a path above the sample surface. For manipulation of the sample surface, a certain threshold tip-surface interaction needs to be exceeded, i.e. the interaction force needs to be sufficiently large so as to be able to manipulate the surface. In an embodiment, the method can be utilized as a TM-AFM based nano-patterning technique used for fast defect repairing of high resolution photomasks and possibly other high-speed nano-patterning applications. In an advantageous embodiment, a sample surface can be modified by performing three-dimensional patterning for obtaining a three-dimensional pattern. Patterning in a vertical or height direction can be controlled by a z-stage.The tip-sample interaction force or tapping force can be tuned in a controlled manner by changing operation parameters, such as e.g. the excitation frequency of the cantilever, without interrupting the imaging process, wherein the probe tip is periodically hammered on the sample with TM-AFM on the area where a specific pattern should be written on the sample surface. The TM-AFM can thus be used as a versatile instrument that enables measurement and manipulation of materials in nanoscale regime. Advantageously, several patterns can be transferred to different samples with imaging speed. The method can also enable in situ imaging while modifying (e.g. patterning) a sample surface using TM-AFM. In this way, while patterning the image of the pattern can also be obtained. The invention thus enables in situ closed loop metrology.

In an embodiment, the tapping force of the probe tip on the surface during said tapping is controlled so as to selectively modify the surface during the tapping.

Advantageously, the multi-frequency excitation can be used for simultaneous imaging and modifying of the surface. As a result of the multi-frequency excitation, the probe can be excited at a plurality of frequencies simultaneously. In an embodiment, a dual excitation is employed wherein the probe is excited at two different excitation frequencies simultaneously, namely a first excitation frequency and a second excitation frequency. In an embodiment, the first excitation frequency is lower than the second excitation frequency. For example, the first excitation frequency and the second excitation frequency may be selected near a fundamental frequency of the cantilever, with the first excitation frequency lower than the chosen fundamental frequency and the second excitation frequency higher than the chosen fundamental frequency. Alternatively, the first excitation frequency can be higher than the second excitation frequency. For example, modifying/writing mode can be performed by using the first mode shape of the cantilever and imaging/reading mode can be performed by using the second mode shape of the cantilever, wherein the first excitation frequency (imaging/reading mode) is higher than the second excitation frequency (modifying/writing mode). The system may be arranged in such a way that the dual excitation allows for both surface measurement (i.e. imaging) and modifying (i.e. patterning) mode.

The cantilever can be made to vibrate at a specific frequency, and the deflection of the tip can be measured at this frequency. Due to the nonlinear motion of the cantilever, information about the sample that is encoded in the deflection at frequencies other than the excitation frequency can be irreversibly lost. Multi-frequency force microscopy involves the excitation and/or detection of the deflection at two or more frequencies. Multi-frequency AFM may include, inter alia, multi-harmonic AFM imaging, bimodal AFM, band excitation, torsional harmonic AFM, nano-mechanical holography. Other techniques are possible. All the information about the properties of a sample can be encoded in the probe's motion, and the dynamics of the cantilever are highly nonlinear. Therefore the harmonics and lower eigenmodes components can be seen as integral parts of the probe tip's motion. The information about the properties of a sample that is included in the other frequency components may thus be irreversibly lost. Multi-frequency AFM methods involve the excitation and/or detection of a plurality of frequencies of the probe's oscillation, wherein the plurality of frequencies are usually associated with either the higher harmonics of the oscillation or the eigenmodes of the cantilever. Multi-frequency excitation/detection schemes can provide higher sensitivity and resolution because these methods are specifically designed to decode the information generated by the nonlinear regions of the tip-surface interaction force.

It is shown that for high-Q cantilevers (e.g. Q ≥ 50), the amplitudes of the higher harmonics are two to three orders of magnitude smaller than the fundamental component. However, the amplitude of the higher eigenmodes can be enhanced by exciting several of them simultaneously, wherein the simplest case is the excitation of the first two eigenmodes. By recording the signal at the excited frequencies, one can acquire complementary information on the sample properties from different channels, one per excited eigenmode. This approach has several advantages.

Optionally, at least one frequency dependent separator is employed based on one or more excitation frequency differences in the excitation signal of the multi-frequency excitation to separate a first excitation from a second excitation frequency, so as to obtain a filtered output signal relevant for producing an image. In an embodiment, a sensed output signal is filtered using a filter as a separator. In an embodiment, a multi-frequency excitation is employed so as to excite the probe using an excitation signal comprising at least two different frequencies, and a sensed output signal is obtained as a result of the excitation signal, wherein a filter is used so as to separate or filter an output signal usable for surface measurement, i.e. usable for producing an image. For instance in case of a dual excitation, a two bandpass filters, one high pass and one low pass filter, etc. can be used.

Alternatively or additionally, a lock-in amplifier can be employed as a separator. In an embodiment the lock-in amplifier is employed as an alternative for a filter. However, combinations of lock-in amplifiers and filters are also possible for separating a first excitation from a second excitation frequency in a multi-frequency excitation. Other solutions are possible, such as using a phase-locked loop, RMS filters, etcetera.

Optionally, the cantilever is a tuned cantilever having a geometry or material properties such as to provide at least two tuned modes, wherein a first mode is tuned with respect to at least a second mode such that the second mode gets excited when the cantilever is actuated in the first mode, wherein the cantilever is arranged such that actuation at the frequency of the first mode decreases the tapping force as a result of dynamic contribution of at least the second mode of the cantilever. The 'second' mode can, but does not necessarily need to, correspond to a second mode of the cantilever. The second mode can be a further mode of the cantilever, such as a second bending mode, third bending mode, first torsion mode, etcetera. The term 'first' and 'second' mode can refer to a selection of two modes, wherein for a tuned cantilever at least two modes ('first' and 'second') are tuned with respect to each other. In an embodiment, a tapered cantilever is employed as a dynamically tuned cantilever. Other geometrical shapes are possible. According to an embodiment, the tapping force can be changed depending on a first frequency and a second frequency, wherein the tuned cantilever is configured to provide a more significant contribution at the first frequency, and less or no significant contribution at the second frequency, wherein the contribution of a further mode results in a reduction of the tapping force and/or peak repulsive force exerted by the tapping cantilever on a sample surface during TM-AFM. In this way, the contribution on the tapping force can be made dependent on a frequency in the excitation signal. In an embodiment, the tuned cantilever comprises eigenfrequencies of which an integer multiple of each other so as to provide an enhanced contribution for the tapping force.

In an embodiment, the geometry of the AFM probe is tuned according to the nature of the tip-sample interactions, wherein the geometry of the cantilever is arranged so as to obtain a frequency response wherein excitation with an excitation signal comprising an excitation frequency for non-modifying the sample surface results in a dynamic increase of the tapping force of the probe tip on the sample surface as a result of a contribution to the tapping force by another mode also excited by said excitation signal comprising the excitation frequency for modifying the sample surface. Advantageously, this other mode can be a further mode, such as a second mode corresponding to the second bending mode of the cantilever. In an example, the second mode is a further mode corresponding to a third bending mode. Many solutions are possible. Additionally, the geometry of the cantilever can be tuned to obtain a frequency response wherein excitation with an excitation signal comprising an excitation frequency for measuring the sample surface (i.e. non-modifying mode) results in a dynamic decrease of the tapping force of the probe tip on the sample surface as a result of the contribution of another mode (e.g. second mode, third mode, etc.) on the motion of the cantilever, wherein motion corresponding to the second mode can synchronize with the first mode causing a retracting interference near the sample surface. Such an auto-synchronization of the modes may considerably reduce the peak repulsive force, since the second mode of the cantilever is purely excited by the tip-sample interaction. Since the frequency components of tip-sample interactions consist of integer multiples of its driving frequency, the resonance frequency of another mode (e.g. second mode) can be adjusted so that the cantilever exhibits a super-harmonic motion with a frequency of for example 6 times the excitation frequency, as for a rectangular cantilever without a tip, the frequency of the second mode is 6.27 times the fundamental resonance frequency, i.e. very close to that of the sixth harmonics (6 times the fundamental resonance frequency).

When the tip-sample interactions are not derivable from the experiments, it is not known how much force is applied on a sample in TM-AFM. The frequency components are integer multiple of each other. A tuned cantilever can be tuned such that the resonance frequencies are also integer multiple of each other. The tuned cantilever can be arranged such as to increase the difference between the peak repulsive force obtained by excitation a bit below its resonance frequency and the peak repulsive force obtained by excitation a bit above its resonance frequency. Therefore, the window of operation for modifying the surface with TM-AFM can be expanded. Advantageously, a tuned cantilever can be employed such as to be able to perform imaging with a lower peak repulsive force and surface modification (e.g. patterning) with a higher peak repulsive force. Accordingly, a tuned cantilever can be arranged to reduce the peak repulsive force only if excited below a resonance frequency (same peak repulsive force if excited above said resonance frequency). In this way, a tuned cantilever can be arranged with a higher spring constant which is going to increase the peak repulsive force if excited in a surface modifying mode (e.g. patterning mode), but not damage in reading mode because of the tuning of the cantilever.

Optionally, the method further comprises retrieving sample surface data comprising at least information representative of sample surface height, and modifying the sample surface based on the retrieved sample surface data. Modifying the sample surface can be performed by adjusting the tapping force. Surface height information or surface z-coordinate can be derived from the retrieved sample surface data. The sample surface data can reveal various features on a sample surface, such as patterns, structures, distortions, surface irregularities, indentations, protrusions, etc., which can be taken into account when modifying the sample surface. The adjustment of the tapping force may be done when a change in surface height information has been identified. In an exemplary embodiment, the surface height information is taken as a measure for adjusting the tapping force. The tapping force can be chosen in such a way that a desired modified sample surface is obtained. For instance, a feature can result in a localized relative increase of sample surface height, so that a higher tapping force may be applied for compensating for this increased sample surface height.

The retrieved sample surface data can be obtained in various ways. In an embodiment, the retrieved sample surface data can be provided by performing a scan or measurement of the sample surface (imaging). For instance, the retrieved sample surface data can be obtained by using a scanning probe microscopy system according to the current invention. Also data coming from previous scans or measurements can be used. However, the retrieved sample surface data does not necessarily need to correspond with measured and/or actual data of the sample surface. For instance, sample surface characteristics (such as a pattern) of a sample can be known, expected and/or estimated, such that the retrieved sample surface data can be provided for the sample without performing an (additional) measurement of the sample surface. Therefore, the sample surface data can also be obtained from a memory, database, network, cloud, etc.

Advantageously, the retrieved sample surface data can be obtained by using a scanning probe microscopy system according to the current invention.

Optionally, the method further comprises building a three-dimensional mesh of the surface for obtaining information indicative of the sample surface, and modifying the sample surface taking into account the information indicative of the sample surface by adjusting the tapping force, if necessary. In an embodiment, a three-dimensional landscape or mesh of the sample surface is built, wherein the force is adjusted according to a height on said landscape. A larger tapping force can be applied when the height is larger. Thus, the height on the three-dimensional landscape can be used as a measure for adjusting the size of the tapping force. For example, when a the three-dimensional landscape or mesh of a surface of the a sample is built, a relative height of the surface of the landscape with respect to a reference height can be determined, wherein the tapping force is adjusted in such a way to modify the surface to obtain a desired three-dimensional landscape.

In an advantageous embodiment, the sample surface is modified by performing 3D patterning for obtaining a 3D pattern on the sample surface. The patterning in a vertical or height direction can be controlled by a Z-stage. Advantageously, sample surface data can comprise three-dimensional data.

Optionally, the system is switchable between a modifying mode, wherein the tapping force is configured such as to perform patterning or writing on the surface by the probe tip tapping on the surface, and non-modifying mode, wherein the tapping force is configured such as to perform surface measurement on the surface by the probe head without modifying the surface. In an embodiment the system is arranged to be switchable during tapping of the probe, so as to be able to control when the probe is in a modifying mode (e.g. patterning) and non-modifying mode (i.e. surface measurement or imaging). In non-modifying mode, a probe is employed having a tip which can be caused to interact with the surface of a sample with low forces to characterize the surface. In one embodiment, the characterization of the surface can be performed down to atomic dimensions. Optionally, the probe is introduced to a surface of a sample to detect changes in surface properties of a sample. By providing relative scanning movement between the tip and the sample, surface characteristic data can be acquired over a particular region of the sample, and a corresponding map of the sample may be generated.

Optionally, the excitation signal is arranged to obtain a higher tapping force in the modifying mode than in the non-modifying mode. The tapping force depends on the modifying mode and non-modifying mode, wherein in modifying mode a higher tapping force is employed so as to be able to modify the surface of a sample.

Optionally, both modifying mode and non-modifying mode are performed during tapping of the probe.

Optionally, patterning and imaging is performed simultaneously.

Optionally, the tapping force is adjusted such as to be above or below a threshold level for selectively modifying the surface, wherein the threshold level is dependent on a material composition of the surface. In an embodiment tapping force can be adjusted to be above or below a threshold level such as to selectively modify or not modify the surface. The threshold level can be dependent on the material of the sample and can be determined by the impact force that is at least required to modify or pattern the sample surface.

Optionally, the tapping force is adjusted by controlling at least one of a tapping frequency or amplitude of the excitation signal. The excitation signal can comprise multiple frequencies, and/or multiple amplitudes. In an embodiment, the excitation signal is a periodic signal. Different types of periodic signals can be employed for the excitation signal, such as a sinusoid excitation signal. Other types of excitation signals may also be employed. In an embodiment, the tapping force can be changed as a result the tapping frequency and probe head deflection amplitude. A dynamic probe head deflection amplitude can be adjusted by a drive excitation voltage in the excitation signal provided to an actuator for excitation of the probe with the excitation signal.

Optionally, a tapping frequency of the probe tip on the surface is controlled by employing at least a first excitation frequency and a second excitation frequency in the excitation signal, the first excitation frequency being smaller than the second excitation frequency, and wherein the tapping force is adjusted by the actuator by switching between the first excitation frequency and second excitation frequency in the excitation signal. The switching between the first excitation frequency and the second excitation frequency in the excitation signal can be performed during tapping.

Optionally, the first excitation frequency is lower than a resonance frequency or harmonic mode of the probe and the second excitation frequency is higher than the resonance or harmonic mode frequency. In an operational frequency response of the cantilever arranged in a SPM, a resonance frequency, and possibly a harmonic frequency, can occur as a peak. Excitation of the probe at a resonance frequency can induce vibrations at a corresponding mode shape of the probe at the resonance frequency. The frequency response and thus resonance frequencies may be dependent on the geometry of the probe, material properties, arrangement, constraints, clamping, damping, etcetera.

Optionally, the excitation signal results in a probe tip deflection amplitude, wherein the probe actuated with an excitation signal at a first excitation frequency results in a first probe tip deflection amplitude, and the probe actuated with an excitation signal at a second excitation frequency results in a second probe tip deflection amplitude, wherein the first excitation frequency and second excitation frequency are configured so that the first probe tip deflection amplitude substantially corresponds to the second probe tip deflection amplitude. In this way, the probe tip deflection amplitudes can be kept constant, while the forces can be increased or decreased by changing a frequency of the excitation signal. In one embodiment, selectively adjusting the frequency of the excitation signal the force of the probe tip on the sample surface can be selectively adjusted while maintaining substantially a same probe tip deflection amplitude. In this way, it is possible by changing a limited amount of input parameters, the force employed on the surface by the probe tip, while simultaneously preventing additional adjustment of the Z-level. Also, the method for modifying a surface a sample, e.g. for nano-patterning a sample, can be simplified. Note that the probe tip amplitude can be seen as a dynamic or periodic tip deflection which depends on the frequency response of probe. When the cantilever is vibrating in free air, the probe tip amplitude may correspond to a free-air amplitude.

Optionally, the resonance frequency tracking is performed for taking into account a change of a frequency response of the probe as a result of a change in the distance between the probe and the sample surface by which a free air resonance frequency of the probe is shifted to a shifted resonance frequency. The method can further comprise: determining the first probe tip deflection amplitude and the second probe tip deflection amplitude and a ratio n between the first probe tip deflection amplitude and the second probe tip deflection amplitude, and determining the shifted resonance frequency for which n times the first probe tip deflection amplitude substantially corresponds to the second probe tip deflection amplitude. A free air resonance frequency of the probe may shift to a shifted resonance frequency when the probe is brought in proximity to the sample surface, also resulting in a shift of the amplitudes resulting from excitation with the first and second excitation frequency. When the first excitation frequency and the second excitation frequency are chosen in relation to the free air resonance frequency, the first probe tip deflection amplitude and the second probe tip deflection amplitude may no longer correspond to each other. Advantageously, a condition can be set in a controller so as to keep the first probe tip deflection amplitude equal to the second probe tip deflection amplitude. The shift of the resonance frequency to the shifted resonance frequency can in this way be successfully tracked. In this way, a reading and writing frequency can be more appropriately chosen, wherein the amplitude at a reading and writing frequency are substantially equal to each other. As a result of frequency tracking, the accuracy can be improved. Furthermore, "reading" artifacts in an obtained image of the sample surface because of a different first and second probe deflection amplitude can be avoided.

Optionally, the first excitation frequency and the second excitation frequency of the at least two frequencies are changed so as to keep n times the first probe tip deflection amplitude resulting from actuation of the probe with an excitation signal at the first excitation frequency substantially equal to the second probe tip deflection amplitude resulting from actuation of the probe with an excitation signal at a second excitation frequency. The resonance curve or frequency response of the probe may shift when the distance between the probe and the sample surface is reduced. In this way, frequency tracking can be carried out when the probe is brought closer to the sample surface so as to keep the first and second probe tip deflection substantially equal to each other. In this case, a better and/or more accurate image can be obtained wherein imaging artifacts are reduced. In an example, the value of n is chosen to be equal to 1. Other values are also possible.

Optionally, an amplitude of the excitation signal is adjusted by adjusting a drive excitation voltage of the probe. As a result, the probe tip amplitude can be changed and/or controlled as a result of the amplitude of the excitation signal.

In accordance with a second aspect, the invention provides a scanning probe microscopy system comprising a sample support structure for supporting a sample, a scan head including a probe comprising a cantilever and a probe tip arranged on the cantilever, an actuator for vibrating the cantilever of the probe during scanning, a sensor unit for obtaining a sensor signal indicative of a position of the probe tip during scanning, and a Z-level sensor for determining the distance between the probe and a sample surface, wherein the scan head is movable relative to the sample for scanning the sample surface with the probe tip. The system further comprises a processor in particular arranged for: controlling the actuator for vibrating the probe for excitation of the probe with an excitation signal; controlling based on a sensor signal received from the Z-level sensor a distance between the sample surface and the probe for tapping of the probe tip on the surface by said excitation of the probe; and adjusting a tapping force of the probe tip on the surface during said tapping, so as to selectively modify the surface during the tapping. The actuator can be arranged to perform a multi-frequency excitation with an excitation signal comprising at least two frequencies for simultaneous imaging and modifying of the sample surface, wherein the tapping force as a result of a first excitation frequency of the at least two frequencies is configured for imaging of the sample surface, and the tapping force as a result of only the second excitation frequency of the at least two frequencies is sufficiently large for modifying of the sample surface.

Optionally, the cantilever is a tuned cantilever with at least two tuned modes, wherein a first mode is tuned with respect to at least a second mode such that the second mode gets excited when the cantilever is actuated in the first mode, wherein the cantilever is arranged such that actuation at the frequency of the first mode decreases the tapping force as a result of dynamic contribution of at least the second mode of the cantilever, wherein the cantilever is tuned by adjusting at least one of a geometry or material properties of the cantilever. Since the cantilever is excited at a frequency for excitation at a first mode, the dynamic contribution of at least the second mode can be seen as a result of the first mode and the second mode.

In accordance with another aspect, the invention provides a computer program product downloadable from a communication network and/or stored on a computer-readable and/or microprocessor-executable medium, comprising program code instructions that, when executed by a scanning probe microscopy system including a processor, causes the system to perform a method according to the current invention.

### Brief description of the drawings

The invention will further be elucidated by description of some specific embodiments thereof, making reference to the attached drawings. The exemplary embodiments are given by way of non-limitative illustration. The detailed description provides examples of possible implementations of the invention, but is not to be regarded as describing the only embodiments falling under the scope. The scope of the invention is defined in the claims, and the description is to be regarded as illustrative without being restrictive on the invention.

In the drawings:
Fig. 1 schematically illustrates an atomic force microscope;
Fig. 2 schematically illustrates a probe that is useable in an embodiment of the invention;
Fig. 3 schematically illustrates a method of the present invention;
Fig. 4 illustrates displacement and force in function of time for an embodiment of the invention;
Fig. 5a illustrates a normalized peak repulsive force versus normalized excitation frequency and normalized amplitude set-point for an embodiment of the invention;
Fig. 5b illustrates a frequency response of a probe in an embodiment of the invention;
Fig. 6 schematically illustrates a system of the present invention;
Figs. 7a and 7b schematically illustrate a probe that is useable in an embodiment of the invention;
Fig. 8 illustrates a modified sample by using a method of the present invention;
Fig. 9 illustrates frequency tracking according to an embodiment of the invention; and
Fig. 10 illustrates frequency tracking according to an embodiment of the invention.

### Detailed description

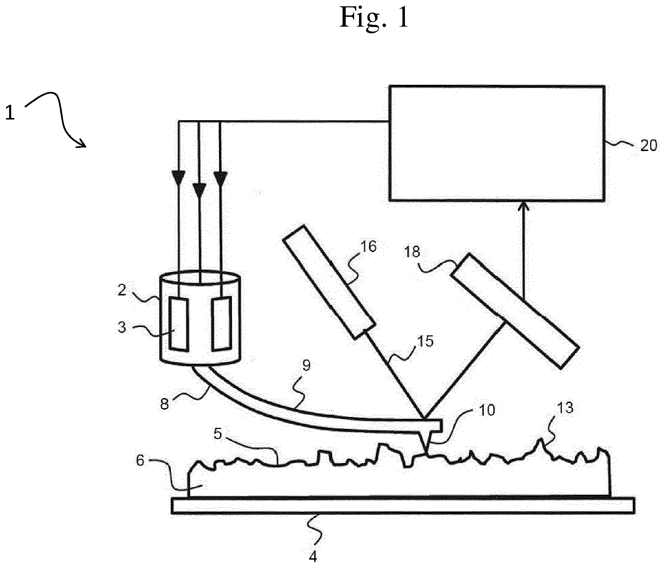

Fig. 1 schematically illustrates the working principle of a typical atomic force microscope (AFM). A probe head 2 is shown comprising piezo type drivers 3 for the X-, Y-, and Z-directional motion of a probe 8. The probe 8 comprises a cantilever 9 having a probe tip 10 arranged for scanning a sample surface 5 of a sample 6. During scanning, a dither piezo (not shown) or other means of actuations such as thermal, electrical, electrostatic, microwave, optical, photo-thermal, etc. actuation may drive the cantilever 9 in vibrational mode, advantageously close to a resonant frequency, to enable tapping of the probe tip 10 on the sample surface 5. The manner of applying a vibrational motion to the probe tip 10 is known to the skilled person.

Scanning of the sample surface 5 is performed by moving the probe tip 10 in the X- and Y direction parallel to the sample surface 5 (or alternatively, by moving the substrate surface in the X- and Y-directions while maintaining the position of the probe tip fixed in the X- and Y-directions). The probe tip 10 is brought in close proximity to the sample surface 5 by means of a Z-directional piezo driver. Once in the position, the probe tip 10 is vibrated in the Z-direction such that it repeatedly touches the surface 5 during scanning thereof. At the same time, a laser 16 illuminates the probe tip with laser beam 15. The precise position in the Z-direction is determined using photo diodes 18 which receive the reflected laser beam 15.

The sample surface 5 is carried using a sample carrier 4. Driving of the piezo drivers 3 located on the probe head 2 is performed using the detector and feedback electronics 20. At the same time, the detector and feedback electronics 20 receive the detected Z-position as determined using photo diodes 18. This principle allows for very precise mapping of surface elements, such as surface element 13 on the surface 5 of the sample 6. AFM performed e.g. using a technique as illustrated in fig. 1 allows the mapping of very small structures and features on the surface, e.g. nanostructures having typical nanometer dimensions (e.g. even <1nm, such as for example individual polymer strings being as thin as 0.4 nm). As described herein above, since the mapping of the surface has to be performed with great precision, the speed at which the method is performed is rather slow. The present invention, however, is not limited to AFM, but may also be applied in combination with other scanning probe microscopy (SPM) methods. Various digital signal processing methods can be applied as an analysis method. In an example, a regularized Kalman filter is employed.

A relative motion between the probe 8 and a sample surface 5 can be generated while the probe-sample interaction is measured. In this way, images or measurements of the sample can be obtained, and the topography or some other property of the sample can be determined with the AFM system 1. However, according to the invention, the surface 5 of the sample 6 can also be modified by a tapping mode atomic force microscopy (TM-AFM) system 1. The method comprises the steps of: vibrating the probe 8 using an actuator for excitation of the probe with an excitation signal; controlling a distance between the sample surface 5 and the probe 8 for tapping of the probe tip 10 on the surface 5 by said excitation of the probe 8; and adjusting a tapping force of the probe tip 10 on the surface 5 during said tapping, so as to selectively modify the surface 5 during the tapping. The excitation signal can be configured to excite the probe 8 so that the tapping force is sufficiently large for modifying the surface 5 of the sample 6. Advantageously, the actuator can be arranged to perform a multi-frequency excitation with an excitation signal comprising at least two frequencies for simultaneous imaging and modifying of the sample surface, wherein the tapping force of the probe tip 10 on the surface 5 as a result of a first excitation frequency of the at least two frequencies in the multi-frequency excitation is configured for imaging of the sample surface 5 and the tapping force of the probe tip 10 on the surface 5 as a result of a second excitation frequency of the at least two frequencies in the multi-frequency excitation is sufficiently large for modifying the surface 5.

Imaging may refer to measuring the sample surface 5, wherein the tip-sample interaction contains information on the material properties of the sample 6. The information can be used in material properties mapping of a sample 6 wherein different materials in the sample 6 can be distinguished and/or for obtaining a topography image of the sample surface 5. In an example, the information can be collected using an additional lock-in amplifier.

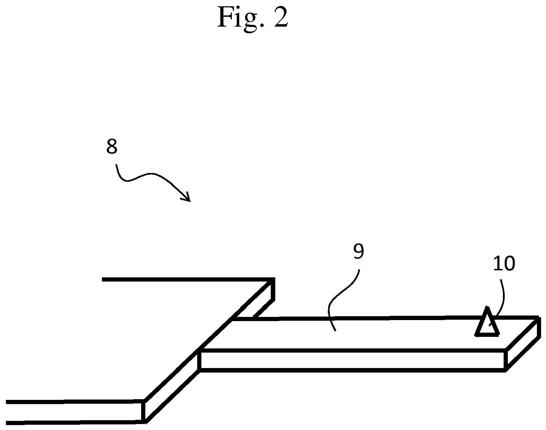

Fig. 2 schematically illustrates a probe 8 that is useable in TM-AFM. The probe 8 comprises a cantilever 9 and a probe tip 10 arranged for contacting the surface 5 of the sample 6 during tapping of the probe 8 on said surface 5. In one embodiment, the probe 8 is coupled to an oscillating actuator or drive to oscillate the cantilever 9 at or near a resonant frequency, wherein the actuator is provided with an excitation signal for causing the actuator to drive the probe 8. Although operating near a resonant frequency or harmonic frequency is advantageous, other frequencies can also be employed wherein the deflection amplitude of the probe tip 10 is sufficiently large. The obtained amplitudes as a result of excitation depends on the frequency components in the excitation signal. The dynamics of the probe 8 can be characterized by a frequency response function of said probe 8.

Although the probe tip 10, which is arranged to contact the sample surface 5 during tapping in TM-AFM, is shown to have a cone shape, other shapes are possible. The probe tip 10 is arranged adjacent to a free end of the cantilever 9, however, other arrangements are possible. Furthermore, the cantilever shown in fig. 2 is rectangular plate. Other plate shapes are also possible, such as triangular or combinations of shapes. For instance, the cantilever 9 may comprise a wider free end. Such a wider free end may bring a torsion mode closer to a first bending mode.

The probe tip 10 tip-radius can be arranged depending on the (required) resolution, maximum speed and window of operation.

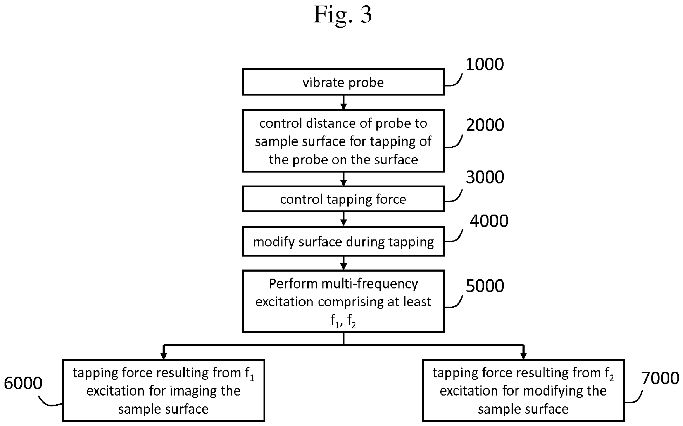

Fig. 3 schematically illustrates a method of the present invention, the method comprising the steps of vibrating 1000 the probe 8 using an actuator for excitation of the probe 8 with an excitation signal; controlling a distance 2000 between the sample surface 5 and the probe 8 for tapping of the probe tip 10 on the surface 5 by said excitation of the probe 8; and adjusting a tapping force 3000 of the probe tip 10 on the surface 5 during said tapping, so as to selectively modify 4000 the surface 5 during the tapping.

In an embodiment, a TM-AFM is applied wherein the cantilever 9 of the probe 8 is excited on or near its fundamental resonance frequency, resulting in an intermittent interaction of the probe tip 10 with the sample surface 5. The effects of tip-sample interactions on the amplitude and phase of the vibration of the cantilever 9 can be measured and recorded so as to generate microscopic images by performing surface measurements. By adjusting an excitation signal provided to the actuator, the tapping force can be adjusted. During tapping, the surface 5 of the sample 6 can be modified as a result of contact of the probe tip 10 with the surface 5, wherein a mechanical load is applied resulting from a hammering action in the contact area, namely a peak repulsive force.

Advantageously, in an embodiment, the actuator can be arranged to perform a multi-frequency excitation 5000 with an excitation signal comprising at least two frequencies (f₁, f₂) for simultaneous imaging and modifying of the sample surface during tapping of the probe tip 10 on the sample surface 5, wherein the tapping force as a result of a first excitation frequency f₁ of the at least two frequencies is configured for imaging 6000 of the sample surface 5 and the tapping force as a result of a second excitation frequency f₂ of the at least two frequencies is sufficiently large for modifying 7000 of the sample surface 5.

In an embodiment, the multi-frequency excitation comprises two frequency components, wherein a first excitation frequency is chosen smaller than a resonance frequency or harmonic frequency of the cantilever 9 and a second frequency is chosen greater than said resonance frequency or harmonic frequency. Exciting both frequencies left and right of the peak of the resonance frequency or the harmonic frequency in the frequency response, at the same time, allows for imaging and modifying of the sample surface 5. With the left frequency it is possible to image the sample surface 5, while the signal as a result of the right frequency is not used. The frequencies can be used simultaneously, wherein one or more filters are employed for separating the output regarding each frequency. Therefore, the cantilever 9 can be excited with both of the frequencies (at least the first excitation frequency and the second excitation frequency), for obtaining an output at both of the frequencies, wherein a filter may be used for separating two output signals resulting from excitation at the first excitation frequency and the second excitation frequency in the multi-frequency excitation. Optionally, one of the signals may then be used for producing an image, while the other signal can be discarded. Filtering may be carried out based on a frequency difference between the at least two excitation frequencies in the multi-frequency excitation, wherein e.g. two bandpass filters, or one high pass one low pass filter, etc. can be employed.

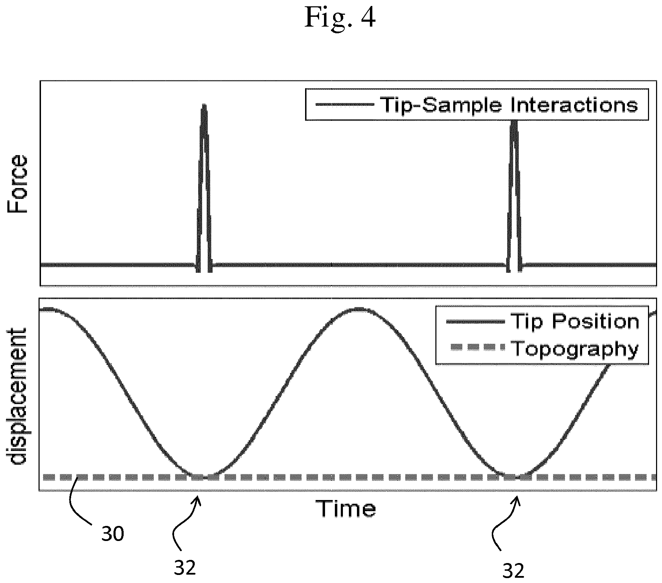

Fig. 4 illustrates displacement and force in function of time for an embodiment of the invention. Typically, in TM-AFM, the cantilever 9 is excited with a frequency near or on its fundamental resonance frequency. To prepare for scanning, the cantilever 9 is brought in the vicinity of the sample surface 5 until its amplitude decreases to a certain set-point amplitude. During tapping, the cantilever 9 with the probe tip 10 of the probe 8 can oscillate with an amplitude according to a mode shape of the cantilever, such that the probe tip 10 can come into contact with a topography 30 of the sample surface 5. The contact moments 32 result in a tip-sample interaction, which results in a tapping force illustrated in the force plot in fig. 4. A periodic excitation signal comprising at least one frequency may be provided so as to obtain a periodic displacement of a free end of the cantilever 9, wherein the probe tip is arranged near the free end. While scanning the sample surface 5, the amplitude can be kept constant by adjusting the distance between the cantilever 9 and the sample 6. The control signal which adjusts the height distance between the cantilever 9 and sample surface 5 can be interpreted as the topography image. The phase delay between the motion of the cantilever 9 and excitation signal can be recorded as a measure of energy dissipation on the sample surface 5 which can be related to adhesion, viscoelasticity or hysteresis in surface energy level. According to the shown embodiment in fig. 4, which is operating in tapping mode, the probe tip 10 hits the sample surface 5 in every cycle, experiencing both attractive and repulsive forces. Since these forces occur only during a fraction of a cycle, the tip-sample interactions affect the motion of the cantilever 9 in a weakly nonlinear manner. Consequently, the motion of the cantilever 9 can be considered to remain harmonic. Although the motion of the cantilever 9 could include effects of higher modes and harmonics, the effects of higher modes tend to be negligible and most likely below the noise level. For example, in certain conditions such as e.g. extremely low Q factors (in the order of 1), the effects of higher modes may be experimentally detected. Nonetheless, for TM-AFM in air, the motion of cantilever 9 may be considered purely harmonic with the higher harmonics being substantially undetectable, suggesting that most of the information on tip-sample interactions is buried below the noise level.

Because of a high quality factor of a cantilever 9, a frequency response function (FRF) of the cantilever 9 can have orders of magnitude lower gain at frequencies other than a resonance frequency or harmonic frequency. Therefore, similar to a band pass filter, it may only pass the frequency content of the force which corresponds to its resonance frequency, and attenuate the remaining of the frequency contents of the forces. Consequently, an output in the form of an obtained signal indicative of the motion of the cantilever 9 may show only one frequency component.

Since the motion of the cantilever 9 remains harmonic, the forces may affect the cantilever 9 as a weak nonlinearity. So, with a good approximation it is possible to say that the amplitude and phase of the cantilever 9 motion may only evolve with the periodic average of the tip sample forces. Thus, information on the periodic average of the tip sample interaction can be available. On the other hand, damage or modification of the surface 5 of the sample 6 during tapping may not occur due to the average of the forces but due to the maximum repulsive force, referred to as Peak Repulsive Force (PRF).

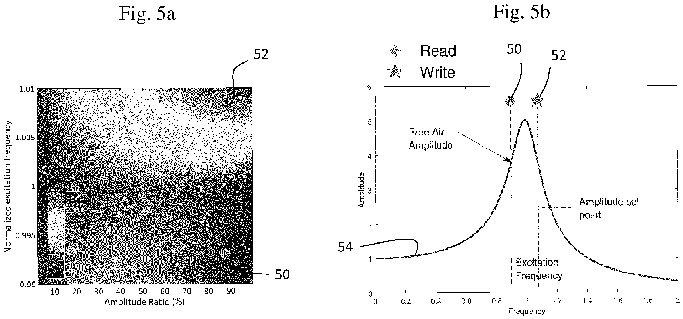

Fig. 5a illustrates a (normalized) PRP versus (normalized) excitation frequency and (normalized) amplitude set-point for an embodiment of the invention. Fig. 5b illustrates a frequency response of a probe 8 in an embodiment of the invention. The influence of the oscillation amplitude and frequency of the cantilever 9 on the PRF is shown in fig. 5a. In an embodiment, adjustment of one or more of the amplitude or frequency can thus be used to adjust the tapping force and/or the PRF. The amplitude and/or frequency can be adjusted by changing the excitation signal provided to the actuator.

In an embodiment, a tapping frequency of the probe tip 10 on the sample surface 5 can be controlled by employing a first excitation frequency and a second excitation frequency in the excitation signal, the first excitation frequency being smaller than the second excitation frequency, and wherein the tapping force is adjusted by the actuator by switching between the first excitation frequency and second excitation frequency in the excitation signal. The switching between the first excitation frequency and the second excitation frequency in the excitation signal can be performed during tapping or scanning in TM-AFM. The amplitude and frequency can be dependent on each other. A frequency response or frequency response function (FRF) can be used to determine a relationship between frequency and amplitude for the cantilever 9 of the probe 8.

In an embodiment, the first excitation frequency is lower than a resonance frequency or harmonic frequency of the probe and the second excitation frequency is higher than the resonance or harmonic mode frequency. The resonance frequency, and possibly harmonic frequency, can occur as peaks in the FRF 54. Fig. 5b shows a FRF 54 with a peak corresponding to a resonance frequency of the cantilever 9. The tapping frequency or oscillation frequency can be adjusted as a result of one or more frequencies in the excitation signal. It is clear that many operation parameters, with a tapping frequency and a tapping amplitude, are possible, wherein in a first group of operation parameters the tapping force is not sufficiently large so as to allow modification of the sample surface 5 by the tapping action of the probe tip 10 on the surface 5, while in a second group of operation parameters, the tapping force is sufficiently large so as to allow modification of the sample surface 5 by the tapping action of the probe tip 10 on the surface 5. Such an operation parameter can be for example a point on the contour plot depicted in fig. 5a. In an embodiment, an operation parameter can be chosen such that the resulting tapping force results in modification of the sample surface 5 during at least one cycle of oscillation of the cantilever 9. The second group of operation parameters can be employed in a writing regime in TM-AFM, wherein a pattern can be transferred on a sample surface 5 (cf. nano-machining, patterning).

The modification of the sample surface 5 in TM-AFM can be attributed to the Peak Repulsive Force (PRF) which is the maximum amount of the tip-sample interactions during each cycle. The PRF or tip-sample forces can be considered to be a function of the amplitude and stiffness of the cantilever. However, the excitation frequency is actually by far the most important imaging parameter that affects the tip-sample forces. Modeling can be applied for determining the tip-sample interactions for different operation parameters, i.e. the excitation frequency and amplitude ratio, in TM-AFM. The effects of operation parameters on tip-sample interactions can be characterized. The modeling may be computational modeling based on analytical models, empirical models, computational models, numerical models such as finite element models, or combinations of such models. Also, experimental measurements can be used. A combination of experimental measurements and computational modeling is also envisaged. Other techniques can also be employed. The measured and calculated PRF can be compared in terms of excitation frequency and amplitude ratio, cf. fig. 5a. The model in fig. 5a can be calculated/measured considering a constant free air amplitude. Referring to fig. 5a and fig. 5b, an above-resonance excitation, such as at a second operation point 52 or operation point 'write', increases the PRF. The second operation point 52 in TM-AFM can be employed for modifying the sample surface 5, which is an advantageous effect for nano-machining technique, patterning, etcetera. By investigating the tip-sample interactions in TM-AFM, it can be determined that the tapping forces not only depend on the amplitude and spring constant, but also are sensitive to the excitation frequency. The excitation frequency can be adjusted to change the amount of PRFs to enable writing regimes for TM-AFM.

The excitation signal provided to the actuator can result in a probe tip deflection amplitude. In an embodiment, the probe 8 actuated with an excitation signal at a first excitation frequency results in a first probe tip deflection amplitude, and the probe actuated with an excitation signal at a second excitation frequency results in a second probe tip deflection amplitude, wherein the first excitation frequency and second excitation frequency can be configured so that the first probe tip deflection amplitude substantially corresponds to the second probe tip deflection amplitude. In an embodiment, the first excitation frequency and the second excitation frequency are arranged substantially symmetrically around a resonance frequency or harmonic frequency in the FRF 54. Therefore, the probe tip deflection amplitudes can be kept constant, while the tapping forces can be increased or decreased by changing a frequency of the excitation signal. Two operation points, namely a 'read' operation point 50 indicated by a rhombus and a 'write' operation point 52 indicated by a star, are provided in fig. 5a and fig. 5b. Note that although the second operation point 52 is indicated by 'write', also simultaneous 'read' and 'write' is possible in this regime.

In one embodiment, by selectively adjusting the frequency of the excitation signal, the tapping force of the probe tip 10 on the sample surface 5 can be selectively adjusted while maintaining substantially a same probe tip deflection amplitude. This may e.g. avoid changing additional adjustment of the Z-level, while the method for modifying a surface a sample, e.g. for nano-patterning a sample, can be simplified. In TM-AFM the probe tip 10 hits the sample surface 5 in every tap, thus encounters both attractive van der Waals and repulsive contact forces in each cycle.

Advantageously, the method and system can be used for simultaneous modifying the sample surface 5 and imaging the sample surface 5. Therefore, the nano-machining technique according to the current invention can be used simultaneously with imaging. The tip-sample forces are mainly attributed to the amplitude and stiffness of the cantilever, which may practically be difficult to change without interrupting the image. However, since the excitation frequency can be used as an imaging parameter that affects the tip-sample forces. Provided that the free air and set-point amplitudes are kept constant, i.e. staying in a vertical line in fig. 5a, one can increase and decrease the forces by changing the excitation frequency without interrupting the image.

A pattern can be transferred to a sample surface 5 in each tracing scan line, while the patterned sample can be imaged in a retracing scan line. Therefore, the outcome may become immediately visible during the patterning process. The excitation frequency can thus be adjusted to change the amount of PRFs to enable simultaneous reading and writing regimes for TM-AFM. According to an embodiment, by changing only the excitation frequency it is possible to transfer a pattern to the sample surface, and image it immediately in retrace lines. Advantageously, the method can be useful in high speed mask repair.

A same dither voltage with two different frequencies, i.e. the first frequency and the second frequency, wherein the first frequency is below a resonance frequency (or harmonic) and the second frequency is above the resonance frequency (or harmonic) of the cantilever, can provide a same free air amplitude and amplitude ratio. A same amplitude ratio can be provided because of a closed loop control. However, the two frequencies can result in different PRFs, especially for high amplitude ratios. If a tapping force damage threshold of the material is between these two forces then one of the situations would be damaging and the other one would be non-damaging.

The excitation signal can be adjustable so as to image an area on the sample 6 with so-called writing operation parameters, i.e. relatively high amplitude ratio and excitation frequency higher than a resonance of the cantilever 9, or so as to image with so-called symmetric reading operation parameters, i.e. same free air amplitude and amplitude ratio but with lower excitation frequency than the resonance of the cantilever 9, see fig. 5. Since the writing operation parameters and reading operation parameters depend, inter alia, on the sample properties, tip properties, spring constant of cantilever 9, etcetera, a calibration may be employed for making sure that utilizing the writing operation parameters results in modifying the sample surface 5 and utilizing reading operation parameters results in non-damaging or non-modifying of the sample surface 5. In an embodiment, experiments can be conducted repeated for different samples and with different free air amplitudes. The frequency offset, and free air amplitude of cantilever can be calibrated for determining the dependency on the probe tip 10 and sample 6 properties, and spring constant of cantilever 9. Other calibration methods or models can be employed. For instance, a computational finite element model can be experimentally validated and used for predicting the effects of operation parameters on tapping force and/or tip-sample interaction in other settings.

In an advantageous embodiment, a multi-frequency excitation signal is employed comprising at least two frequencies, namely a first excitation frequency and a second excitation frequency, wherein the first excitation frequency can be linked to a first operation point (50) for "reading" and the second excitation frequency can be linked to a second operation point (52) for "writing". In this way, it may be possible to perform a multi-frequency for simultaneous imaging and modifying of the sample surface 5. The tapping force as a result of the first excitation frequency (reading mode) is configured for imaging of the sample surface 5 and the tapping force as a result of a second excitation frequency (modifying mode) of the at least two frequencies is sufficiently large for modifying of the sample surface 5. Consequently, this allows imaging and modifying of the sample 5 surface at the same time, making it possible to image the sample 5 surface 5 that has been just modified by tapping of the probe tip 10 on the sample surface 5, earlier. The sample surface 5 is being modified, but what is imaged can be the sample surface 5 without the atom or sample material. So, the modified surface is measured.

In an embodiment, as a result of a tuned cantilever 9 a stiffer cantilever 9 can be employed which may be more appropriate for modifying/damaging a sample surface 5. The cantilever 9 can then be tuned to reduce the PRF only at a first excitation frequency ('reading mode') configured for imaging, wherein excitation at other frequencies different from the first excitation frequency can result in a higher relative PRF.

A multi-frequency excitation is not limited to employing two frequencies, such as a first frequency on a left side and a second frequency on a right side of the peak of a resonance frequency or a harmonic frequency in the frequency response. The relative difference between the PRF in the first frequency and the second frequency can be increased in different ways using the tuned cantilever.

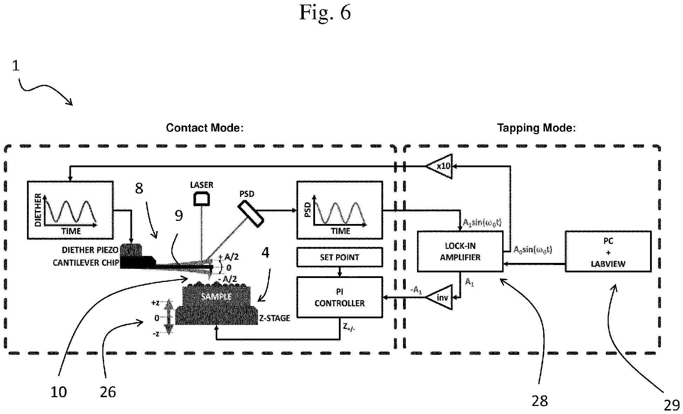

Fig. 6 schematically illustrates a TM-AFM system 1 of the present invention. The system 1 comprises a sample support structure or sample carrier 4 for supporting a sample 6, a scan head including a probe 8 comprising a cantilever 9 and a probe tip 10 arranged on the cantilever 9, an actuator for vibrating the cantilever 9 of the probe 8 during scanning, a sensor unit for obtaining a sensor signal indicative of a position of the probe tip 10 during scanning, and a Z-level sensor for determining the distance between the probe 8 and a surface 5 of the sample 6, wherein the scan head is movable relative to the sample 6 for scanning the surface 5 of the sample 6 with the probe tip 10. The system 1 further comprises a processor in particular arranged for: controlling the actuator for vibrating the probe 8 for excitation of the probe 8 with an excitation signal; controlling based on a sensor signal received from the Z-level sensor a distance between the sample surface 5 and the probe 8 for tapping of the probe tip 10 on the surface 5 by said excitation of the probe 8; and adjusting a tapping force of the probe tip 10 on the surface 5 during said tapping, so as to selectively modify the surface 5 during the tapping.

The probe 8 follows the probe path across the surface 5 of the sample 6 while being vibrated using a piezo actuator. The position of the probe tip 10 can be monitored using photodiode sensor 18 on the sensor head.

The probe 8 can be scanned relative to the sample surface 5 in a direction. In an embodiment, a distance relative to a distance sensor in a direction perpendicular to the sample surface 5 can be monitored for providing a mapping of the topography of the surface 5. The distance sensor may be attached or fixed to a metrology frame of the scanning probe microscopy system 1. The probe 8 can be arranged to vibrate in a bending mode, wherein a probe tip 10 of the cantilever 9 is displaced in subsequent upper and lower extreme positions. During vibration, the probe 8 intermittently is in contact with the sample surface 5. During such contact moments, the probe 8 experiences a force present between the probe tip 10 and the substrate 6 surface 5. The probe tip 10 in its lower position can touch the substrate surface 5, experiencing a Van der Waals force. The height 26 of the probe 8 can be adjusted dependent on surface structures encountered during scanning in a path. By monitoring the height 26 of the probe 8 above the surface 5 using the distance sensor, the height differences can be determined, allowing accurate mapping of the topography of the surface 5. In an exemplary embodiment, the probe tip 9 may be moved in parallel paths such as to allow mapping of (a part of) the sample surface.

The system 1 can comprise means for changing operation parameters. The TM-AFM system 1 may comprise a signal access module and a programmable lock-in amplifier 28. The TM-AFM is operable in contact mode. However, a deflection signal can be isolated and sent to the lock-in amplifier 28, wherein a demodulated amplitude signal can be provided back to the AFM as a deflection error. In this manner, an AFM controller can keep the amplitude constant, by trying to keep the deflection error constant in contact mode. Different operation parameters can be provided with the lock-in amplifier 28, which can be controlled by a software operating on a computer 29. Other software and hardware configurations are possible. In an example, the operation parameters have a same voltage and different frequency.

In an example, a lock-in amplifier can be used for reading the amplitude of a signal in a 'reading' frequency. The amplitude of the same signal but in a 'writing' frequency can be observed using a second lock-in amplifier. Therefore, in case of simultaneous imaging and writing two lock-in amplifiers can be employed.

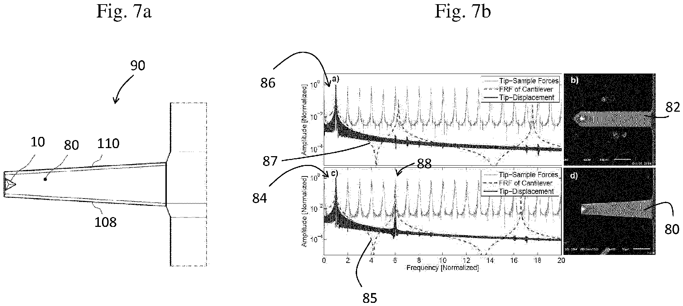

Fig. 7a schematically illustrate a probe that is useable in an embodiment of the invention. Fig. 7b schematically illustrates a (normalized) amplitude of the probe as a function of the frequency, for a first cantilever 80 and a second cantilever 82. Peaks 84, 86 on the FRFs 85, 87 corresponds with the first resonance frequency of the first and second cantilevers 80, 82, respectively.

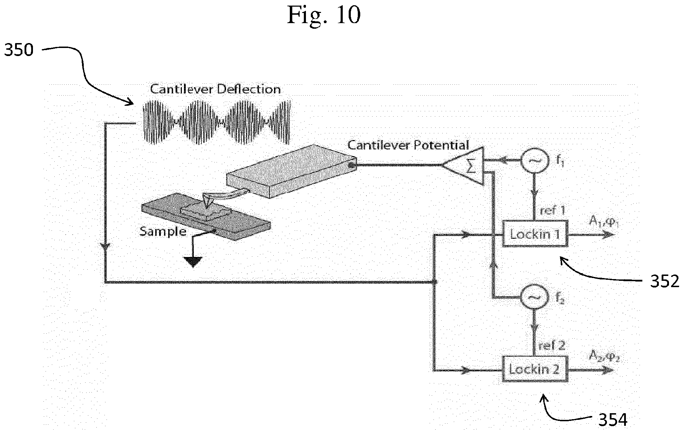

In the probe 90 illustrated in fig. 7a, the sides 108 and 110 of the cantilever 9 have been tapered such as to modify the frequency response function of the probe 90 in order to make it sensitive to the sixth harmonic mode 88 of the excitation frequency (which excitation frequency in use coincides with the resonancy of the probe). The probe illustrated in figure 10 clearly shows the tapered sides 108, 110. The probe of fig. 7a has been employed in order to obtain the sensor signal illustrated in fig. 7b.

The tip-sample interactions or tapping forces in TM-AFM are known to be scaling with the effective stiffness of the probe 8. Thus, the probes can be arranged such as to have a stiffness allowing to obtain the mechanical loads required for modification of the surface. By passively tuning higher modes of the cantilever 80, 82, it is possible to adjust the PRF. In an embodiment, higher modes of the cantilever 80, 82 are passively tuned so as to reduce the repulsive force when the probe is used only for measuring the surface 5 of the sample 6 during tapping. In an embodiment, higher modes of the cantilever 80, 82 are passively tuned so as to decrease the repulsive force when not modifying the sample surface during tapping, so that the relative difference between the repulsive force in modifying and non-modifying (e.g. reading) mode is increased. With respect to the repulsive force, these tuned cantilevers 80 can be dynamically more effective than 'normal' cantilevers 82 with the same static spring constant. Moreover, due to the contribution of higher modes, the proposed tuned cantilevers 80 can provide more information on tip-sample interactions. The extra information provided by the higher harmonics can be used for recognition and mapping of material properties of samples.

The operation parameters, i.e. amplitude and frequency set points, can be chosen with respect to an imaging-only mode and a modifying mode. The modifying mode may be a patterning mode wherein the sample surface 5 is modified by the probe tip 10. Patterning mode may comprise both imaging and simultaneous modification of the surface 5 of the sample 6. Therefore, in an embodiment, both the imaging-only mode as the modifying mode can be regarded as an imaging mode wherein the sample surface topography is measured. However, in another embodiment, in the modifying mode the sample is not measured. Combinations are possible, wherein only during a period of the modifying mode data is collected for measuring sample surface topography (i.e. imaging).

In order to be able to acquire or capture more information from tip-sample interactions, the motion of cantilever can consist of multiple frequency components. For this purpose, the excitation signal (e.g. dither signal) or the system (e.g. cantilever, arrangement and environmental conditions, etc.) can be altered. In an embodiment, an auxiliary excitation periodic signal is introduced with a different frequency so as to obtain a multi-modal operation mode, wherein one or more higher modes of the cantilever 9, 80, 82, are excited simultaneously. Multiple lock-in amplifiers 28 can be utilized to extract the amplitudes and phases of the higher modes. Consequently, two images for each mode can be obtained, namely the amplitude and phase of each mode. The images gathered with a multi-modal AFM reveal that some information is modulated on higher modes which could not be achieved with standard TM-AFM. However, since the external excitation of higher modes non-uniformly increase and decrease the nano indentation, a multi-modal excitation can influence the tapping forces on the sample surface during tapping.

More information can be acquired with TM-AFM by using a multi-harmonic cantilever or operating in fluid environment. By operating in a liquid, the quality factor can be decreased. A multi-harmonic cantilever can increase the response of the higher modes of the cantilever by introducing additional resonating parts to the cantilever, i.e. so-called "harmonic cantilevers", or force sensing cantilevers. Typically, the tip-sample interactions contains peaks at integer multiples of the excitation frequency in the frequency domain. In case the cantilever 9, 80, 82 has a secondary resonator that captures at least some of those frequencies, the obtained deflection signal can contain more information on the sample properties. For example, a cantilever 9, 80, 82 can have a geometrical shape, e.g. by using one or more cutouts, gaps, lumped mass, etc., wherein the ratio between a first and a further mode (e.g. second mode, third mode, etc.) are tailored so that when the resonance frequency of the further mode is exactly an integer times the first resonance frequency, so that more information (e.g. on the sample elasticity, interaction force, etc.) is modulated on the further mode. According to an embodiment, a bi-harmonic probe for which the second resonance frequency is two times the fundamental one can be employed to improve force sensitivity in comparison to normal cantilevers. Many possible cantilevers 9, 80, 82 are possible for gathering more information from the surface.

The geometry of the cantilever 9, 80, 82 can be shaped according to the nature of the tip-sample interactions and arranged so as to tune a further mode (e.g. second mode) with respect to a first mode of the cantilever 9, 80, 82. As a result, the further mode of the cantilever gets excited by one of the super-harmonic component of the tip-sample interactions, and can provide more information on the mechanical properties of the sample. Thus, a tuned cantilever can utilize at least one further mode (e.g. a second mode) to enhance imaging performance by capturing an integer number (e.g. 6th) super-harmonic force component, enabling simultaneous imaging and material properties mapping with better accuracy. Moreover, in this way, the contribution of a further mode (e.g. second mode) on the motion of the cantilevers can reduce the PRF, which may be used in an imaging-only regime.

The tip-sample interactions in the time domain can contain periodic impulse-like functions, cf. fig. 4. Such a function in the time domain can contain a large number of super-harmonic components with integer multiple frequencies, cf. fig. 7b. Yet, since none of these components coincide with any resonance frequencies of the cantilever, their effect is usually undetectable, and the motion of the cantilever is purely harmonic. The geometry of the cantilever can be arranged in such a way to allow a further (e.g. second) bending mode to coincide with one of the super-harmonic components of the force as a result of tapping on the sample surface. As a result, the second bending mode can also be excited by the tip-sample forces. For this purpose the resonance frequency of the further mode (e.g. second mode) of the cantilever can be an integer multiple of its first resonance frequency.

For example, for prismatic cantilevers, based on the Euler-Bernoulli equation, the resonance frequency of the second bending mode is approximately 6.267 times the first resonance frequency. Considering that the ratio between the first and second resonance frequencies of a prismatic cantilever is close to 6, a reasonably small change in shape or geometry can change this ratio to exactly 6 which can be a desired ratio, cf. fig. 7b.

In order to tune the cantilever, a trapezoidal geometry is shown in the example of fig. 7a, for which the width is a linear function of length-wise coordinate. Needless to say, other geometries are possible for obtaining a tuned cantilever 80. The second harmonic response of the cantilever 80 can be improved about an order of magnitude by altering the shape of the cantilever 80 from rectangular to trapezoidal. It must be mentioned that the amplitude of the second harmonic is still much smaller than the first mode. However, since the surface-modifying forces (repulsive) are effective in a very short range, even a very small change in the indentation can result in considerable changes in the force.

Since the frequency ratio is exactly 6, the motion of the second mode is always synchronized with the first mode. As shown in Fig. 7b a self-synchronization of the vibration modes, causes a reduction in attack speed of the tip while it is touching the sample surface 5 and consequently reduces the repulsive mechanical load during the contact. In order self-synchronization phenomena to happen the second mode of the cantilever can be tuned to an even integer multiple of the first mode. Frequency ratios other than six can also be employed. A sixth harmonic can correspond to a first bending mode. Other frequency ratios can be used for obtaining a contribution from e.g. a further bending mode, a torsion mode, etc. In case of a torsion mode, the location of the tip can be off-centered so as to obtain a dynamic contribution from the further mode

Advantageously, the actuator can be arranged to perform a multi-frequency excitation of the tuned cantilever, with an excitation signal comprising at least two frequencies for simultaneous imaging and modifying of the sample surface. The tapping force as a result of a first excitation frequency of the at least two frequencies is configured for imaging of the sample surface and the tapping force as a result of a second excitation frequency of the at least two frequencies is sufficiently large for modifying of the sample surface.

A tapered cantilever as depicted in fig. 7 can result in a significant relative tapping force increase, for example approximately hundred times larger tapping force compared to a conventional cantilever. A tapered cantilever has a different dynamic characteristics such that in a reading or non-modifying mode (e.g. a first excitation frequency) the tapered cantilever reduces the force both in the first mode as in the second mode of the cantilever, while in the writing mode (e.g. a second excitation frequency), the second mode of the cantilever is configured to modify the sample surface 5 (cf. "writing mode"). In this case, the first mode of the cantilever enables modification of the sample surface 5, while the second mode of the cantilever also enables modification of the sample surface, increasing the total contribution for modifying the sample surface 5 (e.g. for writing, patterning, correcting, etc.) by the two modes.

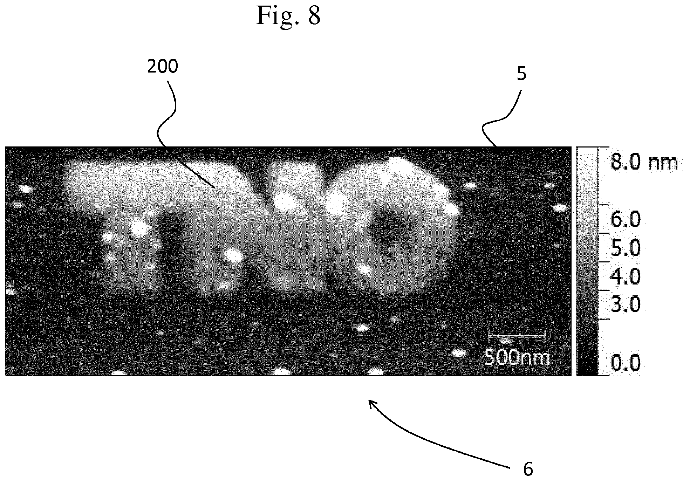

Fig. 8 illustrates a logo 200 nano-patterned on a sample 6 by using a method or system 1 of the present invention. The sample surface 5 is modified by a probe operating in TM-AFM. In an example, the logo 200 is printed on a silicon dioxide sample 6 with a diamond coated cantilever 8, 80, 82. Other materials and configurations are possible. Also, the shape (e.g. sharpness) and material properties (e.g. coating) of the probe tip 10 can be selected depending on the purpose, sample material, operation parameters, speed, resolution, depth to be achieved, etcetera.

The probe tip 10 modifies the sample surface 5 in writing configuration, and may immediately image the sample surface 5 with the same tip in reading configuration. In order to visualize the results immediately while doing the nano-machining, the aforementioned technique is only applied during the trace line, and retrace lines are only imaged with in reading mode.

The "first" mode and the "second" mode relate to a selection of the modes of the cantilever. For instance, the "first" mode does not have to necessarily correspond to a first mode shape of the cantilever and the "second mode" does not have to necessarily correspond to a second mode shape of the cantilever.

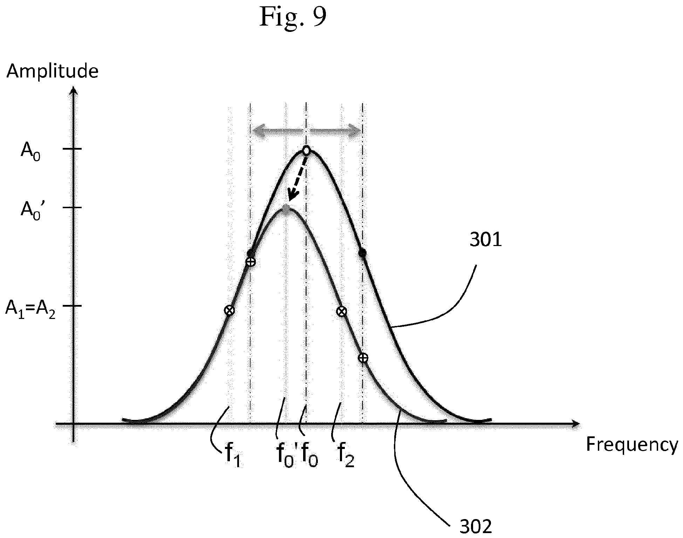

Fig. 9 illustrates frequency tracking according to an embodiment. The horizontal axis corresponds with the frequency and the vertical axis corresponds with the amplitude. Two resonance frequency peaks 301, 302 are shown, wherein the first peak 301 corresponds with the peak of the free air resonance frequency f₀ and the second peak 302 corresponds with the peak of the shifted resonance frequency f₀'. When the probe 8 is moved closer to the sample surface 5, e.g. for being in contact mode TM-AFM, a resonance frequency curve may be shifted. The maximum amplitude A₀ at the free air resonance frequency f₀ in the first peak 301 can be reduced to a shifted maximum amplitude A₀' at the shifted resonance frequency f₀' in the second peak 302. However, in some embodiments it may also be possible that the maximum amplitude A0 at the free air resonance frequency f₀ corresponds to the maximum amplitude at the shifted resonance frequency f₀', while only the free air resonance frequency f₀ is shifted to the left, i.e. shifted resonance frequency f₀' smaller than the free air resonance frequency f₀.

The first excitation frequency f₁ and the second excitation frequency f₂ of the at least two frequencies can be changed so as to keep n times the first probe tip deflection amplitude A₁ resulting from actuation of the probe with an excitation signal at the first excitation frequency f₁ substantially equal to the second probe tip deflection amplitude A₂ resulting from actuation of the probe with an excitation signal at a second excitation frequency f₂. The value of n can define a ratio between the first probe tip deflection amplitude A₁ and the second probe tip deflection amplitude A₂. In an embodiment, the value of n can be equal to 1, i.e. A₁ = A₂.

Furthermore, the resonance frequencies f₀ and f₀' can be tracked. The resonance frequency tracking can be performed for taking into account a change of a frequency response of the probe 8 as a result of a change in the distance between the probe 8 and the sample surface 5 by which a free air resonance frequency f₀ of the probe 8 is shifted to a shifted resonance frequency f₀'. The first probe tip deflection amplitude A₁ and the second probe tip deflection amplitude A₂ can be determined. The shifted resonance frequency for which n times the first probe tip deflection amplitude A₁ substantially corresponds to the second probe tip deflection amplitude A₂ can then be determined. In this way, it is known where the free air resonance frequency f₀ is shifted to, so that a 'reading' and 'writing' frequency f₁, f₂ can be more appropriately chosen. As a result of the shift of the free air resonance frequency f₀ to the shifted resonance frequency f₀' also the amplitudes A₁, A₂ at the first and second excitation frequency f₁, f₂, are changed. However, a condition can be set in a controller so that n times A₁ remains equal to A₂. In an example n = 1, however other values can also be used. In an example n is an integer number.

By tracking the resonance frequency, an improved control over the reading frequency f₁ and writing frequency f₂ can be obtained. This can be done by setting a condition that n times A₁ has to be equal to A₂, e.g. by means of a controller. A further condition that at least one of A₁ or A₂ has to be P times the amplitude at the free air resonance frequency can also be set. In an example the further condition is set for both A₁ and A₂. In an example P is approximately around 0.9. This condition can be introduced so as to be able to check whether the peak repulsive force will be high enough for achieving reading and writing when the probe 8 is excited at respectively the reading frequency f₁ and writing frequency f₂.

Hence, by tracking the resonance frequency, e.g. from the free air amplitude f₀ to the shifted resonance frequency f₀', the accuracy of modifying and reading the sample surface 5 can be improved. A controller can be arranged for determining A₁ and A₂ and, if necessary, moving the resonance frequency in such a way so that A₂ becomes equal to n times A₁, so that the condition of n · A₁ = A₂ is satisfied. In this way, certain "reading" artifacts in the obtained image of the sample surface 5 resulting from a n · A₁ ≠ A₂ condition can be avoided, e.g. difference in a topography image, wherein a sample surface 5 location is appearing deeper (faulty). Advantageously, the controller can be configured to perform this process so as to keep this condition satisfied. In the illustrated frequency tracking example in figure 9, n is equal to 1, so that a same amplitude is used, i.e. A₁ = A₂. By moving the resonance frequency the amplitudes can become equal. However, in general, any ratio of amplitudes can be employed. A controller can be configured for determining A₁ and A₂ and, if necessary, move the resonance frequency in such a way so that the condition n · A₁ = A₂ is satisfied.

Fig. 10 shows a schematic set-up of an embodiment wherein frequency tracking is employed for maintaining A₁ equal to A₂. The first excitation frequency f₁ (reading) and second excitation frequency f₂ (writing) are sent to the probe 8 simultaneously by means of a modulated excitation signal, so that reading and writing is performed at the same time. A modulated signal 350, such as an amplitude/frequency modulated signal, instead of a sine wave can be obtained in this way. In this example the modulated signal 350 forms a beating signal 350. The beating signal 350 can be provided to the locking amplifiers 352, 354. The locking amplifiers 352, 354 may each have a function generator arranged for generating respectively a function with frequency f₁ and a function with frequency f₂. The two functions are used for modulation so as to obtain the beating signal 350. Since it is known which frequencies are used for modulation, the controller is able to find the changes which have happened using demodulation.

The frequency tracking may have two separate feedbacks, wherein a first feedback is arranged for maintaining the condition A₁=A₂ and a second feedback is arranged for keeping A₁ and A₂ equal to P (setpoint) times the free air amplitude, wherein P<1. Advantageously, the setpoint P is in a range between 0.4-0.99, preferably approximately 0.85-0.95. Other values can also be used. The condition of the second feedback is arranged to control the force of the probe 8 applied on the sample surface 5. The value of P can relate to the amplitude ratio as shown on the horizontal axis of fig. 5a and may thus be selected depending on the required PRF. Also the sidebands around f₀, determined by the distance between f₀ and respectively f₁ and f₂, may influence the PRF and may be selected depending on the required PRF.

A beating signal 350 (including the two frequencies f₁ and f₂ close to each other) can be used wherein reading and writing is performed simultaneously, however, switching between reading and writing is also possible. There can be different possibilities for switching between reading and writing. A continuous beating signal may allow both reading and writing. By turning off the beating signal 350 and using a regular sine wave with frequency f₁ it is possible to operate in reading mode without writing. Depending on the material properties of the sample speed can also be used. On silicon going from 1 Hz to 0.1 Hz may result in switching between reading and writing. Further, the switching can be based on a setpoint. If for example the setpoint is lowered (for example from 0.9), a same beating signal 350 can be applied while not writing as the force is smaller. The amplitude can be reduced as a result of the reduced setpoint, so that the force can be reduced directly.

Alternatively or additionally, switching between reading and writing can also be achieved by changing the excitation signal (e.g. frequency, amplitude setpoint or excitation drive amplitude) such that the second or 'write' operation point 52 is moved away from a higher force region (in top right corner in figure 5a) to a lower force region. A continuous change of the exerted forces can be advantageous for creating a 3D structure on the sample surface, whereas an abrupt change of the excitation signal, by jumping between distinct settings, can be advantageous for enabling sudden switching on and off of writing (patterning) on the sample surface.

Above described method utilizes continues reading and writing while in the same tracking resonant frequency. However this method is not limited by using symmetrical sidebands for modulation or by use of only 2 frequencies. In order to improve effectiveness of writing and accuracy of reading the sum of the sinusoidal signals one with frequency f₁ and A₁, and second with f₂ and A₂ is utilizes where f₀-f₁ ≠ f₂-f₀, where f₀ is a resonant frequency. Moreover a feedback can be set to satisfy a condition n · A1 = A2 by either adjusting one of the frequencies f₁ or f₂, or changing piezo drive amplitudes.

Amplitude modulated signal (or beating signal) can result in decreased contact between the tip and the sample. In order to improve contact between the sample and the tip, a third frequency f₃ can be introduced to minimize the time when the tip is not in contact with the sample or frequency modulation can be used.

In an embodiment, the system is arranged to find defect areas, compare a mask with a desired pattern, identify the defect type, and perform a repairing process.

Scanning probe based nano-machining has many applications such as fabricating nano wires, nano-dots, single electron transistors and many other devices for physics experiments. One of the applications that require high throughput nano-machining is repair of high photomasks for optical lithography, which is currently one of the main patterning technologies for semiconductor industries. Thus, production, inspection and repair of high precision photomasks remain one of the challenges in high volume manufacturing. Thanks to a nanoscale resolution, the TM-AFM method and system according to the current invention can be used for inspection and repair of certain types of defects in photomasks, e.g. 32nm and 64nm node photomasks. A nano-machining method based on TM-AFM can be used as well in other applications. The method can offer a possibility of fast and automated photomask defect repair.

The sample surface 5 can be modified by hammering simultaneously with imaging, wherein the tip-sample interactions are adjusted via operation parameters of the TM-AFM so that the AFM can be quickly and efficiently be switched between imaging and hammering modes. Since the imaging and nano-machining are performed simultaneously the process can be performed much faster and drift control can be performed much easier.

In an example, after modification of the surface and/or patterning with TM-AFM, wet cleaning can be applied for cleaning of the residuals on the sample surface.

Herein, the invention is described with reference to specific examples of embodiments of the invention. It will, however, be evident that various modifications and changes may be made therein, without departing from the essence of the invention. For the purpose of clarity and a concise description features are described herein as part of the same or separate examples or embodiments, however, alternative embodiments having combinations of all or some of the features described in these separate embodiments are also envisaged.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. The carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or rewriteable media, digital or analog media, hard disk drive, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. For example, a sample can be movable relative to the scan head for scanning the sample surface with the probe tip. Other kinematic inversions are also possible. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the scope of the invention, as is determined by the claims. The invention may be practiced otherwise then as specifically described herein, and is only limited by the appended claims.

## Claims

1. Method for modifying a surface of a sample using a scanning probe microscopy system, the system comprising a scan head including a probe, the probe comprising a cantilever and a probe tip arranged on the cantilever, wherein the scan head is movable relative to the sample for scanning the sample surface with the probe tip, the method comprising the steps of:
vibrating the probe using an actuator for excitation of the probe with an excitation signal;
controlling a distance between the sample surface and the probe for tapping of the probe tip on the sample surface by said excitation of the probe;
adjusting a tapping force of the probe tip on the surface during said tapping, so as to selectively modify the surface during the tapping; and
wherein the actuator is arranged to perform a multi-frequency excitation with an excitation signal comprising at least two frequencies for simultaneous imaging and modifying of the sample surface, wherein the tapping force as a result of a first excitation frequency of the at least two frequencies is configured for imaging of the sample surface, and the tapping force as a result of a second excitation frequency of the at least two frequencies is sufficiently large for modifying of the sample surface.

2. Method according to claim 1, wherein at least one frequency dependent separator is employed based on one or more excitation frequency differences in the excitation signal of the multi-frequency excitation for separating an output as a result of a first excitation frequency from an output as a result of a second excitation frequency, so as to obtain a filtered output signal relevant for producing an image.

3. Method according to claim 1 or 2, wherein the cantilever is a tuned cantilever having a geometry or material properties such as to provide at least two tuned modes, wherein a first mode is tuned with respect to at least a second mode such that the second mode gets excited when the cantilever is actuated in the first mode, wherein the cantilever is arranged such that actuation at the frequency of the first mode decreases the tapping force as a result of dynamic contribution of at least the second mode of the cantilever.

4. Method according to any one of the preceding claims, wherein the method further comprises retrieving sample surface data comprising at least information representative of sample surface height, and modifying the sample surface based on the retrieved sample surface data.

5. Method according to any one of the preceding claims, wherein the method further comprises building a three-dimensional mesh of the sample surface for obtaining information indicative of the sample surface, and modifying the sample surface taking into account the information indicative of the sample surface.

6. Method according to any one of the preceding claims, wherein the tapping force is adjusted such as to be above or below a threshold level for selectively modifying the surface, wherein the threshold level is dependent on a material composition of the surface, wherein the tapping force is adjusted by controlling at least one of a tapping frequency or amplitude of the excitation signal.

7. Method according to claim 6, wherein a tapping frequency of the probe tip on the surface is controlled by employing at least a first excitation frequency and a second excitation frequency in the excitation signal, the first excitation frequency being smaller than the second excitation frequency, and wherein the tapping force is adjusted by the actuator by switching between the first excitation frequency and second excitation frequency in the excitation signal.

8. Method according to claim 7, wherein the first excitation frequency is lower than a resonance frequency or harmonic mode of the probe and the second excitation frequency is higher than the resonance or harmonic mode frequency.

9. Method according to any one of the preceding claims, wherein the excitation signal results in a probe tip deflection amplitude, wherein the probe actuated with an excitation signal at a first excitation frequency results in a first probe tip deflection amplitude, and the probe actuated with an excitation signal at a second excitation frequency results in a second probe tip deflection amplitude, wherein the first excitation frequency and second excitation frequency are configured so that n times the first probe tip deflection amplitude substantially corresponds to the second probe tip deflection amplitude.

10. Method according to claim 9, wherein resonance frequency tracking is performed for taking into account a change of a frequency response of the probe as a result of a change in the distance between the probe and the sample surface by which a free air resonance frequency of the probe is shifted to a shifted resonance frequency, wherein the change of the resonance frequency is taken into account by:
determining the first probe tip deflection amplitude and the second probe tip deflection amplitude and a ratio n between the first probe tip deflection amplitude and the second probe tip deflection amplitude, and
determining for a changed frequency response of the probe the shifted resonance frequency for which n times the first probe tip deflection amplitude substantially corresponds to the second probe tip deflection amplitude.

11. Method according to any one of the preceding claims, wherein the first excitation frequency and the second excitation frequency of the at least two frequencies are changed so as to keep n times the first probe tip deflection amplitude resulting from actuation of the probe with an excitation signal at the first excitation frequency substantially equal to the second probe tip deflection amplitude resulting from actuation of the probe with an excitation signal at a second excitation frequency.

12. Method according any one of the preceding claims, wherein an amplitude of the excitation signal is adjusted by adjusting a drive excitation voltage of the probe.

13. Scanning probe microscopy system comprising a sample support structure for supporting a sample, a scan head including a probe comprising a cantilever and a probe tip arranged on the cantilever, an actuator for vibrating the cantilever of the probe during scanning, a sensor unit for obtaining a sensor signal indicative of a position of the probe tip during scanning, and a Z-level sensor for determining the distance between the probe and a sample surface, wherein the scan head is movable relative to the sample for scanning the sample surface with the probe tip, wherein the system further comprises a processor configured for applying a method as defined in any one of the previous claims, in particular arranged for:
controlling the actuator for vibrating the probe for excitation of the probe with an excitation signal;
controlling based on a sensor signal received from the Z-level sensor a distance between the sample surface and the probe for tapping of the probe tip on the surface by said excitation of the probe; and
adjusting a tapping force of the probe tip on the surface during said tapping, so as to selectively modify the surface during the tapping
wherein the actuator is arranged to perform a multi-frequency excitation with an excitation signal comprising at least two frequencies for simultaneous imaging and modifying of the sample surface, wherein the tapping force as a result of a first excitation frequency of the at least two frequencies is configured for imaging of the sample surface, and the tapping force as a result of a second excitation frequency of the at least two frequencies is sufficiently large for modifying of the sample surface.

14. Scanning probe microscopy system according to claim 13, wherein the cantilever is a tuned cantilever with at least two tuned modes, wherein a first mode is tuned with respect to at least a second mode such that the second mode gets excited when the cantilever is actuated in the first mode, wherein the cantilever is arranged such that actuation at the frequency of the first mode decreases the tapping force as a result of dynamic contribution of at least the second mode of the cantilever, wherein the cantilever is tuned by adjusting at least one of a geometry or material properties of the cantilever.

15. Computer program product downloadable from a communication network and/or stored on a computer-readable and/or microprocessor-executable medium, comprising program code instructions that, when executed by a scanning probe microscopy system including a processor, causes the system to perform a method according to any one of the claims 1-12.
